# EUROPÄISCHE PATENTSCHRIFT

(11) **EP 0 904 213 B1**
(45) Veröffentlichungstag und Bekanntmachung des Hinweises auf die Patenterteilung: **12.10.2005**
(21) Anmeldenummer: 97930298.1
(22) Anmeldetag: 03.06.1997
(51) Int. Cl.: B60L 15/00, B60L 13/03

(54) **ABSCHNITTSWECHSELVERFAHREN FÜR BAHNSYSTEME MIT LANGSTATOR-LINEARMOTOR**
SECTION SWITCHING PROCESS FOR RAILWAY SYSTEMS WITH A LONG STATOR LINEAR MOTOR
PROCEDE DE COMMUTATION DE SECTIONS DE SYSTEMES FERROVIAIRES A MOTEURS LINEAIRES A STATOR ALLONGE

(30) Priorität: 13.06.1996 DE 19623670
(43) Veröffentlichungstag der Anmeldung: 31.03.1999
(73) Patentinhaber: SIEMENS AKTIENGESELLSCHAFT, 80333 München (DE)
(72) Erfinder: FISCHPERER, Rolf, D-10719 Berlin (DE)
(86) Internationale Anmeldenummer: PCT/DE1997/001108
(87) Internationale Veröffentlichungsnummer: WO 1997/047493

(56) Entgegenhaltungen:
- DE-A- 4 130 779
- DE-A- 19 505 963
- HELLINGER R ET AL: "LANGSTATORANTRIEB TRANSRAPID: DIMENSIONIERUNG UND OPTIMIERUNG" ELEKTRIE, Bd. 48, Nr. 11/12, 1.Januar 1994, Seiten 436-443, XP000503173

## Beschreibung

Die Erfindung betrifft ein Verfahren zum Abschnittswechsel für Bahnsysteme mit Langstator-Linearmotor. Bei Bahnsystemen mit solchen Motoren, etwa Magnetschwebebahnen, ist die Statorwicklung in Form von wenigstens einem schienenartigen Strang längs des Fahrwegs angeordnet. Das mit dem Langstator, also dem Primärteil eines Linearmotors zusammenwirkende Sekundärteil, das dem Rotor eines herkömmlichen Elektromotors entspricht, befindet sich an dem längs des Fahrwegs bewegten Fahrzeugs. Es gibt Bahnsysteme mit nur einem Wicklungsstrang. Gegenstand der Erfindung sind jedoch solche Bahnsysteme, bei denen zwei parallel angeordnete Wicklungsstränge vorhanden sind. Die einen Wicklungsstränge sind aus Gründen des Wirkungsgrades und des Leistungsbedarfs üblicherweise in mehrere Statorabschnitte (im folgenden kurz Abschnitte genannt) unterteilt. Die einzelnen Abschnitte sind elektrisch voneinander getrennt und werden nur dann mit Strom versorgt, wenn sie von einem Fahrzeug überfahren werden. Um eine kontinuierliche Fortbewegung des Fahrzeuges längs des Fahrweges zu ermöglichen, muß der Strom von einem nicht mehr benötigten Abschnitt auf den nächstfolgenden Abschnitt eines Wicklungsstranges umgeschaltet werden. Dieses Umschalten der Abschnitte muß wegen der hohen Spannungen stromlos erfolgen. Das Umschalten des Stroms von einem Abschnitt auf den sich in Fahrrichtung anschließenden nächsten Abschnitt wird prinzipiell so vorgenommen, daß zunächst der Strom des momentan aktiven Abschnitts abgeregelt, d. h. auf Null heruntergefahren wird. Wenn sich der genannte Abschnitt im stromlosen Zustand befindet, kann die Umschaltung auf den nächsten Abschnitt erfolgen und dann der Strom wieder auf seinen ursprünglichen Wert aufgeregelt werden. Während der Auf- und Abregelzeiten stehen somit nur reduzierte Schubkräfte zum Fahrzeugantrieb zur Verfügung. Während der Umschalt - bzw. Schalterbetätigungsphase sind die genannten Abschnitte völlig stromlos, so daß überhaupt keine Schubkraft zur Verfügung steht. Um einen völligen Schubkraftverlust zu vermeiden, ist bei den in Rede stehenden Bahnsystemen ein zweiter Langstator bzw. ein zweiter Wicklungsstrang vorhanden der ebenfalls in einzelne Abschnitte unterteilt ist. Die Abschnitte des zweiten Wicklungestranges sind versetzt zu den Abschnitten des ersten Wicklungsstranges angeordnet, so daß die Trennstelle zwischen den aufeinander folgenden Abschnitten des einen Wicklungsstranges von einem Abschnitt des jeweils anderen Wicklungsstranges überlappt wird. Zur Umschaltung des Antriebsstromes sind verschiedene Abschnittswechselverfahren bekannt.

Beim sog. Dreischrittverfahren verlaufen längs der Fahrstrecke insgesamt drei Streckenkabelsysteme. Die Streckenkabel eines Antriebsbereiches der Fahrstrecke werden von einem (Einfachspeisung) oder von zwei Unterwerken (Doppelspeisung) mit Strom gespeist. Die jeweils zum Fahrzeugantrieb benötigten Abschnitte eines Wicklungsstranges werden fortlaufend mit den Streckenkabeln elektrisch verbunden. Normalerweise, d.h. wenn ein Abschnittswechsel nicht vorzunehmen ist, sind nur zwei sich gegenüberliegende Abschnitte des einen und des anderen Wicklungsstranges bzw., in Fahrtrichtung, gesehen des linken und des rechten Wicklungsstranges aktiv. Bevor ein Fahrzeug eine Trennstelle zwischen zwei aufeinanderfolgenden Abschnitten überfährt, wird der auf die Trennstelle folgende Abschnitt zugeschaltet. Beim Abschnittswechsel steht somit die volle elektrische Leistung bzw. die volle Schubkraft zur Verfügung. Nach Überfahren der Trennstelle wird der vor der Trennstelle liegende und nicht mehr zum Fahrzeugantrieb benötigte Abschnitt wieder abgeschaltet. Der Nachteil dieses Verfahrens liegt vor allen Dingen in dem hohen "Hardware-Aufwand". Es müssen drei Streckenkabel und wenigstens drei Umrichter in einem Unterwerk bereitgestellt werden.

Bei einem anderen Verfahren, dem sog. Wechselschrittverfahren, das z. B. aus dem Aufsatz "Energieversorgung des Langstatorantriebs" in der Zeitschrift "etz" Bd. 108 (1987) Heft 9, Seiten 378 bis 381, bekannt ist, sind nur zwei Streckenkabel vorhanden. Da ein drittes Streckenkabel fehlt, während des Abschnittwechsels aber drei Abschnitte gleichzeitig überfahren werden, muß stets einer der drei Abschnitte stromlos bleiben, was zu einem maximalen Schubkrafteinbruch von 100% des betroffenen Wicklungsstranges führt. Dieser Schubkrafteinbruch rührt daher, daß während des oben beschriebenen Abschnittswechsels die umzuschaltenden Abschnitte während der Umschaltphase völlig stromlos sind und nur der die Trennstelle überlappende Abschnitt des anderen Wicklungsstranges aktiv ist. Dies wirkt sich in Form von Rucken negativ auf den Fahrkomfort aus und verursacht Netzschwankungen im Speisenetz der Unterwerke.

Die Aufgabe der Erfindung besteht darin, den Schubkrafteinbruch bei einem Wechselschrittverfahren zu reduzieren.

Diese Aufgabe wird durch die Merkmale des Anspruches 1 gelöst. Bei der Lösung der gestellten Aufgabe wurde von Bahnsystemen mit Doppeleinspeisung ausgegangen. Bei einer Doppelspeisung wird das Streckenkabel eines Antriebsbereiches von zwei Unterwerken mit Strom versorgt, die an den Enden des Streckenkabels angeordnet sind. In jedem Unterwerk ist für jedes Streckenkabel ein Umrichter vorhanden. Der grundlegende Erfindungsgedanke besteht darin, ein doppelgespeistes Strekkenkabel während eines Abschnittswechsels elektrisch in zwei Teilstränge aufzutrennen, wobei der eine Teilstrang von einem Unterwerk und der andere Teil vom anderen Unterwerk in Einfachspeisung mit Strom versorgt wird. Zum Zeitpunkt des Abschnittwechsels stehen dann insgesamt drei Spannungsquellen für die bei einem Abschnittswechsel gleichzeitig befahrenen drei Abschnitte zur Verfügung. Durch die Auftrennung des einen Kabelstranges liefern die beiden Unterwerke in die beiden umzuschaltenden Abschnitte nur die halbe elektrische Leistung (im Gegensatz zur vollen Leistung bei Doppeleinspeisung), so daß insgesamt nur 150 % der elektrischen Leistung bzw. der maximal möglichen Schubkraft von 200% zur Verfügung steht.

Das erfindungsgemäße Verfahren wird nun unter Zuhilfenahme von schematischen Darstellungen näher erläutert. Es zeigen:
- Fig. 1: eine schematische Abbildung, die einen Antriebsbereich eines Fahrweges vereinfacht darstellt.
- Fig. 2-7: die für einen erfindungsgemäßen Abschnittswechsel notwendigen Schritte.

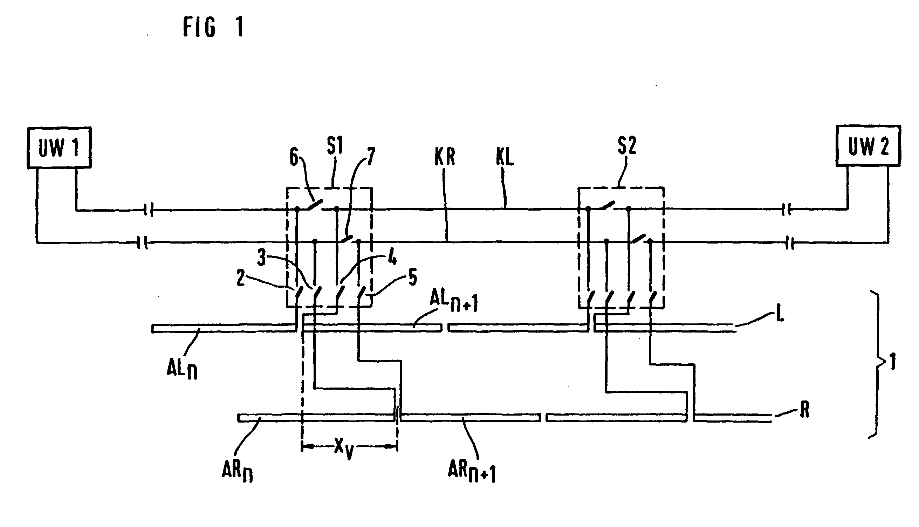

Wie aus Fig. 1 ersichtlich ist, sind längs eines Fahrweges 1 ein linker Wicklungsstrang L und ein rechter Wicklungsstrang R angeordnet. Die Wicklungsstränge L und R sind in einzelne, getrennt mit Strom versorgbare Statorabschnitte (im folgenden kurz Abschnitte genannt), ALₙ, ALₙ₊₁, ....usw. und Abschnitte ARₙ, ARₙ,....usw. unterteilt. Längs des Fahrweges 1 sind zwei Streckenkabel KL und KR angeordnet. Die genannten Abschnitte sind über Verbindungskabel mit den ihnen zugeordneten Strekkenkabeln verbunden. Diese elektrischen Verbindungen sind jeweils durch einen Speiseschalter trennbar. Die Abschnitte AR des rechten Wicklungsstranges R sind um einen Versatz xᵥ gegenüber den Abschnitten AL des linken Wicklungsstranges L versetzt. Jeweils vier der Speiseschalter 2 - 5 sind zu einer Gruppe in einer gemeinsamen Schaltstelle zusammengefaßt. Jeder Schaltstelle ist ein erstes Paar aufeinanderfolgender Abschnitten ALₙ, ALₙ₊₁ des einen Wicklungstranges L und ein zweites Paar aufeinanderfolgender und versetzt zum ersten Paar angeordneter Abschnitte ARₙ und ARₙ₊₁ des anderen Wicklungsstranges R zugeordnet. In Fig. 1 sind zwei Schaltstellen S1 und S2 beispielhaft dargestellt. In jeder Schaltstelle befinden sich vier Speiseschalter, in Schaltstelle S1 die Speiseschalter 2, 3, 4, 5, wobei die Speiseschalter 2, 3 einem Paar aufeinanderfolgender Abschnitte ALₙ, ALₙ₊₁ des linken Wicklungsstranges L und die Schalter 4, 5, einem Paar aufeinanderfolgender Abschnitte ARₙ, ARₙ₊₁ des rechten Wicklungsstranges R zugeordnet sind. In den Schaltstellen befinden sich außerdem Kuppelschalter 6, 7, mit denen die Streckenkabel KL und KR jeweils in Teilstränge TLa, TLb, TRa, TRb elektrisch trennbar sind. An den Enden der Streckenkabel KL und KR sind zwei Unterwerke UW 1, UW 2 angeordnet, die die Strekkenkabel KL und KR bzw. die ihnen zugeordneten Wicklungsstränge L und R, im Sinne einer Doppelspeisung mit Strom versorgen.

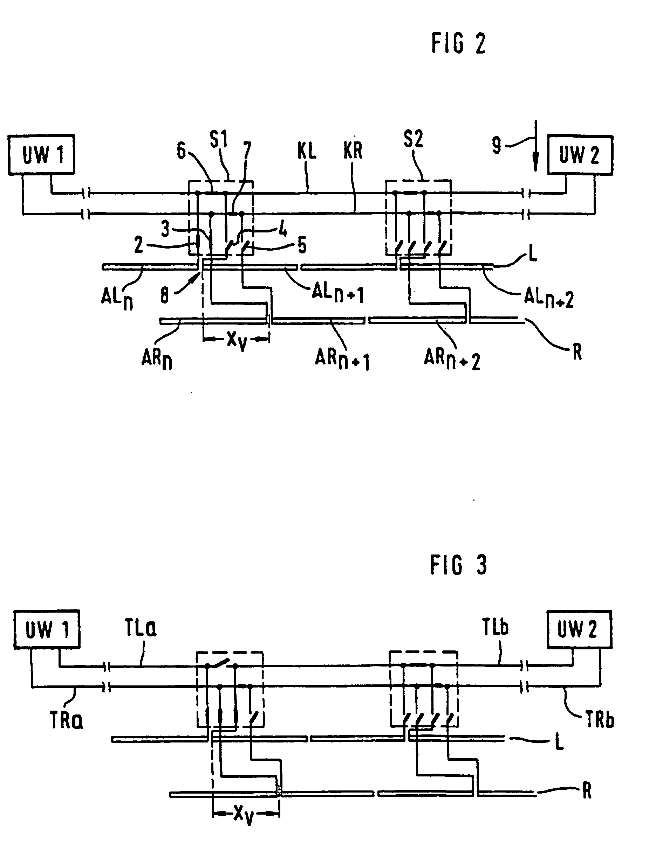

Der Ablauf des erfindungsgemäßen Verfahrens ist aus Fig. 2 - 7 und aus dem Diagramm Dl ersichtlich. Aus Gründen der Übersichtlichkeit sind die zur Durchführung des Verfahrens notwendigen Komponenten nur in Fig. 1 - 2 mit Bezugszeichen versehen. Die mit einem bestimmten Verfahrensschritt korrelierten Positionen eines Fahrzeuges sind in D 1 durch X1, X2 usw. angegeben.

Bevor ein Fahrzeug F eine bestimmte, vor der Trennstelle 8 liegende und überwachte Stelle X 1 des Fahrwegs erreicht hat, sind die beiden Abschnitte ALₙ und ARₙ mit Strom versorgt. Die Speiseschalter 2, 3 der Schaltstelle S1 sind geschlossen. Über entsprechende Verbindungsleitungen kann Strom vom Strekkenkabel KL zum Abschnitt ALₙ und vom Streckenkabel KR zum Abschnitt ARₙ fließen. Der Strom wird dabei von einem Umrichter (nicht dargestellt) des Unterwerks UW 1 und einem Umrichter (nicht dargestellt) des Unterwerks UW 2 nach Art einer Doppelspeisung geliefert. Um eine Doppelspeisung zu ermöglichen, ist der Kuppelschalter 6 im Streckenkabel KL geschlossen. Gleiches trifft für den Kuppelschalter 7 im Strekkenkabel KR zu, in das ebenfalls die Unterwerke UW 1 und UW 2 Strom einspeisen. Die genannten Abschnitte sind somit aktiv. Das Fahrzeug ist mit seiner vollen Länge jeweils innerhalb der genannten Abschnitte angeordnet. Für den Antrieb des Fahrzeugs steht somit die volle Schubkraft (2 x 100% = 200%) zur Verfügung.

Wenn das Fahrzeug die Stelle X1 erreicht hat, wird der Strom eines Unterwerks, im vorliegenden Fall des Unterwerks UW 2, auf den Wert Null abgeregelt. Dieser Vorgang ist durch den Pfeil 9 in Fig. 2 symbolisiert. Der Strom im anderen Unterwerk UW 1 bleibt unverändert. Beim Abregeln des Stromes und später bei dessen Aufregeln wird darauf geachtet, daß ein maximal zulässiger Ruck, d.h. eine maximal zulässige negative oder positive Beschleunigungsänderung des Fahrzeuges nicht überschritten wird (Ruckbegrenzung). Im Gegensatz zu einem herkömmlichen wechselschrittverfahren wird also keiner der am Abschnittswechsel beteiligten Abschnitte völlig stromlos geschaltet, sondern die Stromeinspeisung wird, solange der entsprechende Abschnitt noch in Wechselwirkung mit dem Fahrzeug steht, nur auf 50% reduziert. Dementsprechend ergibt sich nur eine Schubreduzierung von 50% in dem betroffenen Abschnitt gegenüber einer Schubreduzierung von 100% beim herkömmlichen Wechselschrittverfahren. Da der zweite befahrene Abschnitt ARₙ des Wicklungsstranges R voll aktiviert ist, ergibt sich bei X2 in der Summe eine Schubkraft der beiden Abschnitte ALₙ und ARₙ von 150%. Dieser Wert verringert sich, wie noch gezeigt wird, während des weiteren Fortgangs des Abschnittswechsels nicht.

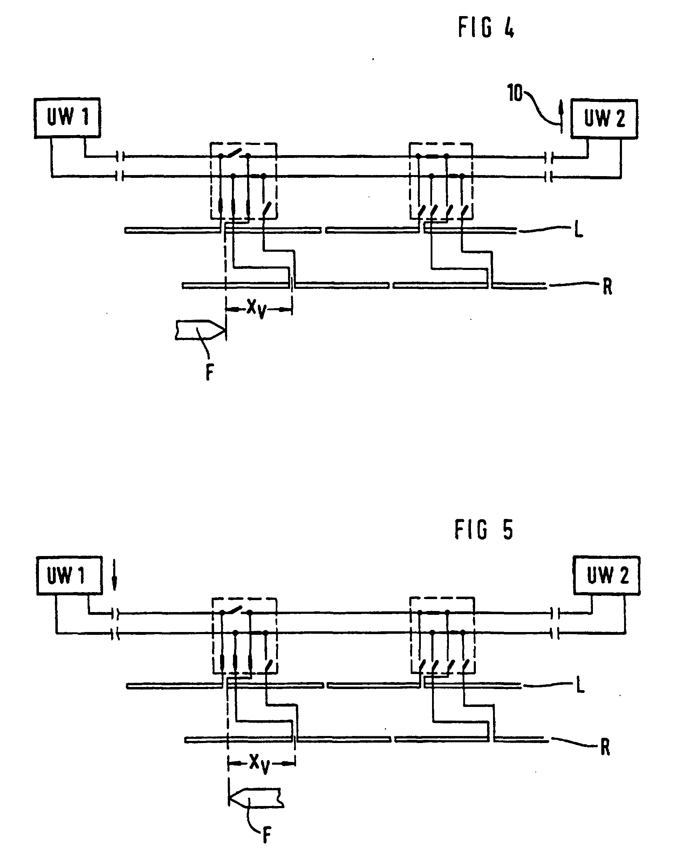

Als nächster Verfahrensschritt wird der Kuppelschalter 6 geöffnet und das Streckenkabel KL in zwei Teilstränge TLa und TLb elektrisch getrennt (Fig. 3). Der Speiseschalter 4 wird geschlossen, wodurch der Abschnitt ALₙ₊₁ über den Teilstrang TLb mit dem Unterwerk UW 2 verbunden wird. Der Strom im Unterwerk 2 wird nach dem Schließen des Speiseschalters 4 wieder auf seinen ursprünglichen Wert aufgeregelt (Pfeil 10 in Fig. 4). Am Ende dieses Aufregelvorgangs hat das Fahrzeug F die Position X4 erreicht. Es befindet sich mit seiner vollen Fahrzeuglänge noch innerhalb des Abschnittes ALₙ, der über den Teilstrang TLa vom Unterwerk UW 1 mit Strom versorgt wird (Einfachspeisung). Der sich an die Trennstelle 8 anschließende Abschnitt ALₙ₊₁ wird dagegen in Einfachspeisung vom Unterwerk UW 2 versorgt.

Im weiteren Verlauf fährt das Fahrzeug F (Fig. 4) in den Wirkungsbereich des Abschnittes ALₙ₊₁ ein und verläßt in gleichem Maße den vorhergehenden Abschnitt ALₙ, wobei sich seine gegenüber dem Abschnitt ALₙ wirksame Fahrzeuglänge verringert und seine gegenüber dem Abschnitt ALₙ₊₁ wirksame Fahrzeuglänge vergrößert. Die in Zusammenwirkung mit dem Abschnitt ALₙ hervorgerufene Schubkraft nimmt also kontinuierlich ab und die in Zusammenwirkung mit dem Abschnitt ALₙ₊₁ bewirkte Schubkraft stetig zu (vgl. Teildiagramm D 1.3). An der Stelle X5 bzw.xₘ, an der das Fahrzeug die Trennstelle 8 zur Hälfte passiert hat, sind die genannten Schubkraftanteile gleich groß. Insgesamt bleibt die Schubkraft beim Überfahren der Trennstelle 8 konstant. Zusammen mit der Schubkraft ergibt sich zwischen X4 und X6 des Abschnittes ARₙ eine Gesamtschubkraft von ebenfalls 150%.

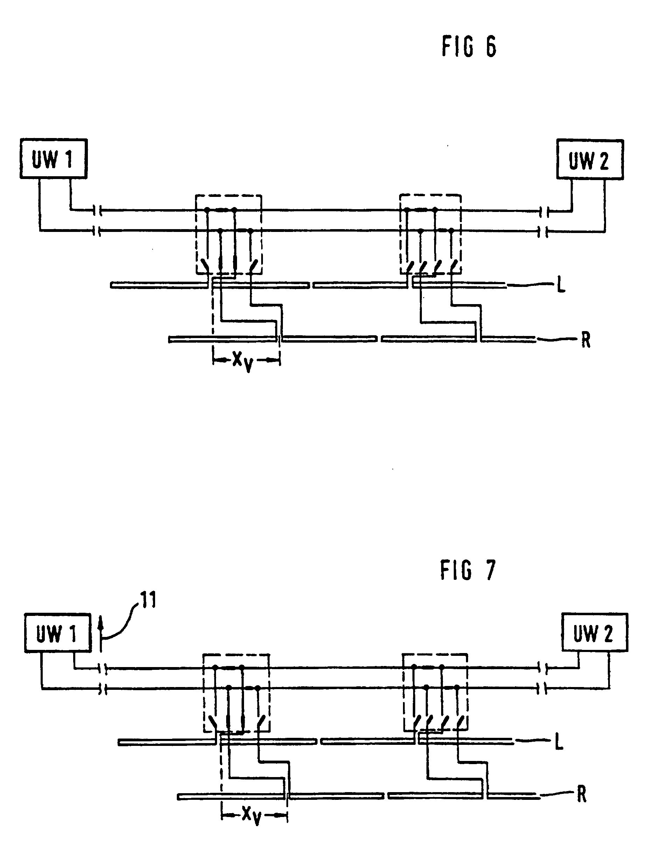

Wenn das Fahrzeug den Abschnitt ALₙ vollständig verlassen hat (Position X6) wird der Strom im Unterwerk UW 1 abgeregelt. Am Ende des Abregelvorganges ist der Abschnitt ALₙ stromlos. Das Fahrzeug F (Fig 5) befindet sich mit seinem hinteren Ende an der Position X7. Der stromlos gewordene Abschnitt ALₙ wird durch Öffnen des Schalter 2 vom Teilstrang TLa getrennt und der Kuppelschalter 6 geschlossen. Das Betätigen der genannten Schalter nimmt eine gewisse Zeit in Anspruch, so daß sich das Fahrzeug F nun mit seinem hinteren Ende an der Position X8 befindet. Die beiden Teilstränge TLa und TLb sind nun wieder miteinander verbunden. Der Strom im Unterwerk 1 wird aufgeregelt (symbolisiert durch Pfeil 11 in Fig.7). Am Ende dieses Aufregelvorganges befindet sich das Fahrzeug F mit seinem Hinterende an der Position X9. Der Abschnitt ALₙ₊₁ wird nun wieder von beiden Unterwerken UW 1 und UW 2 versorgt (Doppelspeisung). Die beiden wirksamen Abschnitte ALₙ₊₁ und ARₙ sind voll aktiviert, dementsprechend ist in jedem Abschnitt wieder die volle Schubkraft von 200 % wirksam (vgl. D 1.2 und D 1.3).

Es ist nun ein Zustand wie am Anfang des Abschnittswechsels erreicht. Die als nächstes umzuschaltenden Abschnitte sind die Abschnitte ARₙ und ARₙ₊₁. Zur Einleitung des bevorstehenden Abschnittswechsels wird der das Streckenkabel KR versorgende Umrichter heruntergefahren, d.h. der vom Unterwerk UW 1 in das Streckenkabel KR einerseits eingespeiste Strom wird auf Null reduziert. Als nächstes wird der Kuppelschalter 7 geöffnet und der Speiseschalter 5 geschlossen. Der Abschnitt ARₙ₊₁ ist dann über den Teilstrang TRb mit dem Unterwerk UW 2 verbunden. Es kann dann ein neuer Abschnittswechsel beginnen, der analog zum oben beschriebenen abläuft.

Der minimale Abschnittsversatz ist dem Teildiagramm D 1.2 oder D 1.3 zu entnehmen. Er ergibt sich aus der Strecke x_{ges} und der Fahrzeuglänge l_{Fa}. Die Strecke x_{ges} setzt sich aus den Teilstrecken x_{R}, x_{S} und xₗ zusammen. Die Strecke x_{R} ist jene Strecke, die bei dem ruckbegrenzten Abbau des Nennschubes (Strecke zwischen X1 und X2 sowie X8 und X9) durchfahren wird. Die Strecken x_{S} sind die Wege, die während der Schaltzeiten, also der Betätigungszeiten der Schalter zurückgelegt werden. Die Strecken xₗ schließlich entsprechen jenen Strekken, die während der Auf - und Abregelzeiten des Stromes in den Unterwerken zurückgelegt wird.

Dem erfindungsgemäßen und dem herkömmlichen Wechselschrittverfahren ist gemeinsam, daß zu jedem Zeitpunkt des Abschnittwechsels ein Abschnitt vom Abschnittswechsel nicht betroffen ist. Es liegt daher der Gedanke nahe, den Schubkraftverlust der umzuschaltenden Abschnitte mit Hilfe dieses Abschnitts auszugleichen. Eine Möglichkeit, einen solchen Schubkraftausgleich zu erreichen bestünde darin, nicht benötigte Leistungsreserven, die zum Beispiel bei einer Beharrungsfahrt zur Verfügung stehen, zu nutzen. Diese Möglichkeit des Schubkraftausgleiches hat allerdings den Nachteil, daß insbesondere während der Beschleunigungsphasen - und bei einer kastenoptimierten Auslegung generell - praktisch die volle installierte Umrichterleistung benötigt wird und dann keine Stromreserve zum Schubkraftausgleich verfügbar ist.

Eine weitere Möglichkeit besteht darin, eine Leistungsreserve dadurch zu schaffen, daß grundsätzlich nicht der gesamte Umrichterstrom genutzt wird, solange kein Abschnittswechsel erfolgt. Eine derartige Stromreserve kann dadurch geschaffen werden, daß leistungsfähigere Umrichter eingesetzt werden. Dies hat aber den Nachteil von höheren Investitionskosten. Eine zweite Möglichkeit zur Schaffung einer Leistungsreserve besteht darin, den Nennstrom bei einer gegebenen Umrichterleistung unter Inkaufnahme einer Erniedrigung des Schubvermögens zwischen den Abschnittswechseln zu reduzieren. Beim herkömmlichen Wechselschrittverfahren beträgt, wie oben ausgeführt, der Schubkraftverlust 100 % in einem Wicklungsstrang. Die zum Schubkraftausgleich benötigte Mehrleistung im jeweils anderen Wicklungsstrang würde daher 100 % betragen, d.h. 100 % pro Umrichter. Eine solche Leistungsreserve kann entweder nur durch hohe Investitionskosten oder einer nicht mehr tolerierbaren Reduzierung des Schubvermögens erreicht werden. Bei einem erfindungsgemäßen Wechselschrittverfahren mit Mischspeisung beträgt der Schubkraftverlust während des Abschnittswechsels nur 50 % im betroffenen Wicklungsstrang. Das bedeutet, daß die zur Verfügung zu stellende Mehrleistung nur 50 % beträgt, welche zudem auf 3 statt 2 verbleibende Umrichter aufgeteilt werden kann, d.h. die Mehrleistung pro Umrichter beträgt lediglich 33 % anstelle von 100 %. Das Diagramm D 2 betrifft einen Schubkraftausgleich durch Reduzierung des Nennstromes auf 75 % zwischen den Abschnittswechseln. Wie aus dem Teildiagramm D 2.3 ersichtlich ist, wird während des Abschnittswechsels (Position X1 bis Position X9) der Strom des vom Abschnittswechsel nicht betroffenen Abschnittes ARn von 75% auf 100% erhöht. Insgesamt ergibt sich dadurch eine gleichmäßige Schubkraft von insgesamt 150% (Teildiagramm D 2.3).Bei einer Erniedrigung des Schubvermögens von insgesamt nur 25 % wird also eine gleichmäßige Schubkraft wie bei einem Dreischrittverfahren und damit ein optimaler Fahrkomfort erreicht. Ein weiterer Vorteil besteht darin, daß Flickererscheinungen, d. h. Strom - und Leistungsschwankungen durch die gleichmäßige Netzbelastung praktisch verhindert sind.

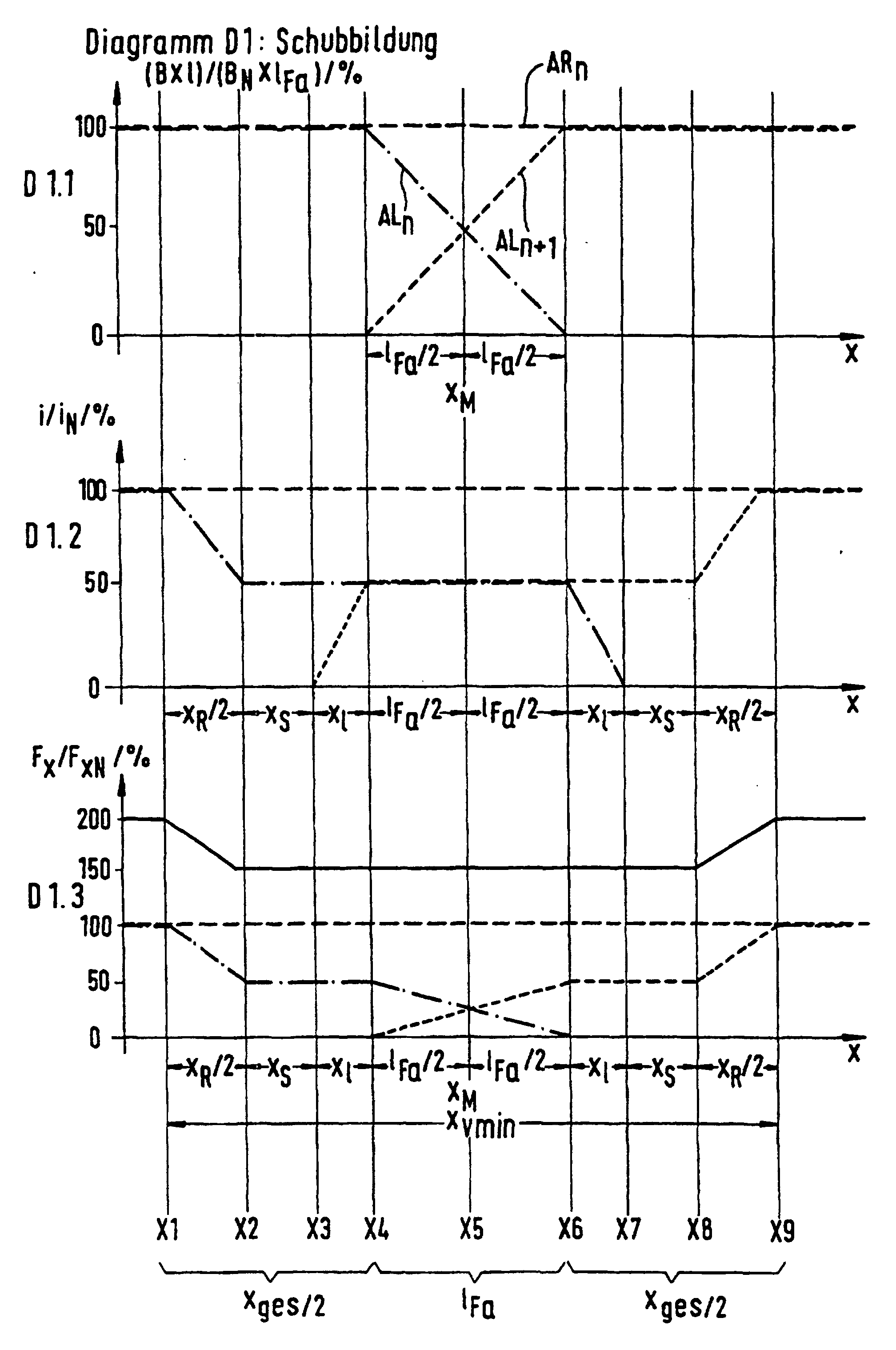

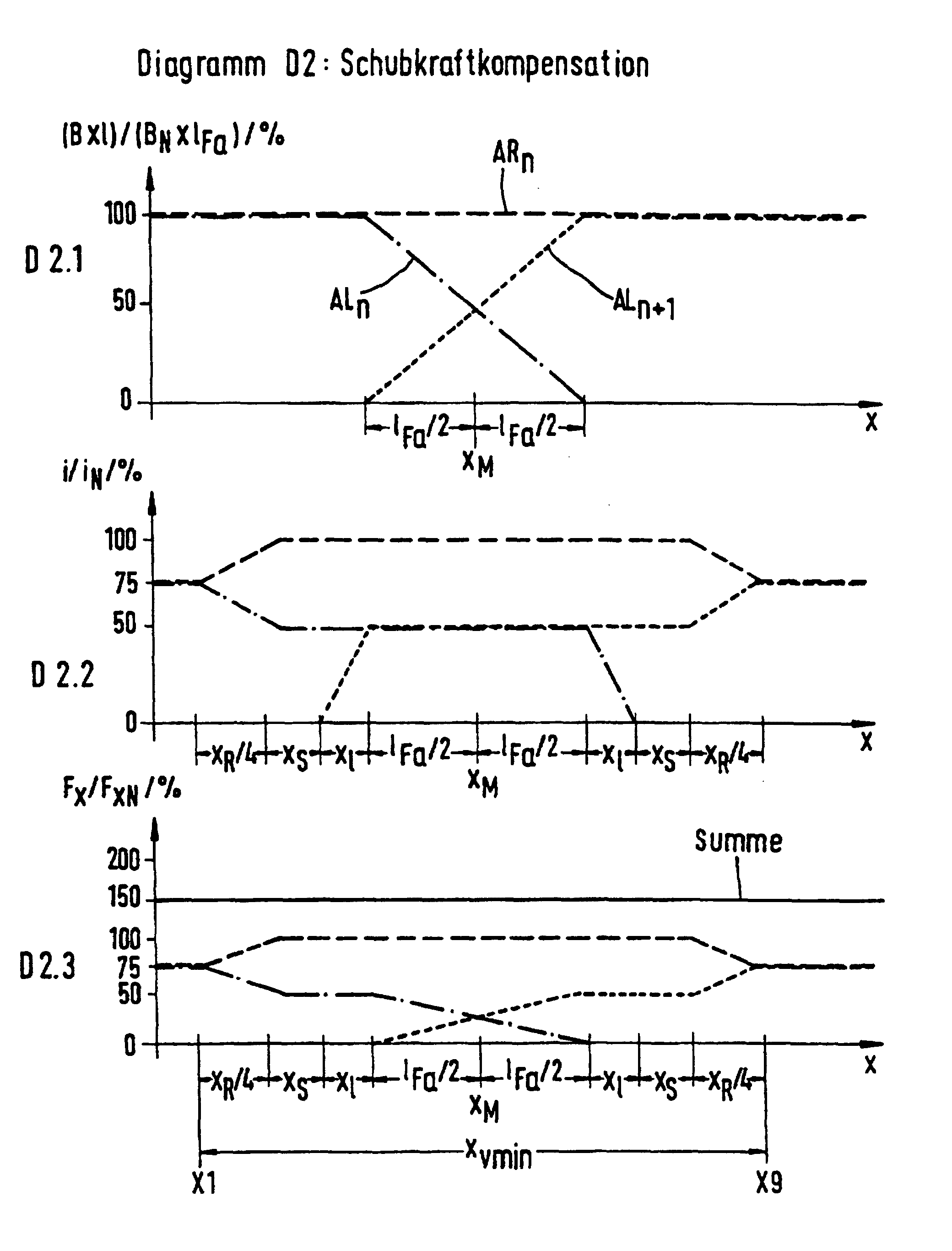

## Patentansprüche

1. Abschnittswechselverfahren zum Umschalten des Stromes zwischen aufeinanderfolgenden Statorabschnitten der Statorwicklung eines ein Fahrzeug (F) und einen Fahrweg umfassenden Bahnsystems mit Langstator-Linearmotor mit folgenden Merkmalen:
a) Der Fahrweg (1) umfaßt einen rechten und einen linken Stator-Wicklungsstrang (R bzw.L), die sich aus mehreren Abschnitten (A) bzw. Einzelwicklungen, nämlich mehreren Stator-Abschnitten zusammensetzen,
b) die Abschnitte des linken Wicklungsstranges (L) sind versetzt zu den Abschnitten des rechten Wicklungsstranges (R) angeordnet,
c) dem linken Wicklungsstrang (L) ist ein erstes Streckenkabel (KL) und dem rechten Wicklungsstrang (R) ein zweites Streckenkabel (KR) zur Stromversorgung der Abschnitte zugeordnet,
d) ein erstes Unterwerk (UW 1) versorgt die Streckenkabel vom einen Kabelende her und ein zweites Unterwerk (UW 2) vom anderen Kabelende her mit Strom,
e) die Streckenkabel sind mit Hilfe eines Schalters in zwei Teilstränge (TLa, TLb) trennbar, wobei beim Umschalten des Stromes bzw. beim Abschnittswechsel der eine Teilstrang (TLa) mit dem ersten (ALn) und der andere Teilstrang (TLb) mit dem zweiten (ALn+1) der umzuschaltenden Abschnitte elektrisch verbunden ist.

2. Verfahren nach Anspruch 1, das folgende zeitlich aufeinanderfolgende Schritte umfaßt:
a) Bevor das Fahrzeug (F) die Trennstelle (8) zwischen zwei umzuschaltenden Abschnitten (ALₙ, ALₙ₊₁) eines Wicklungsstranges (L) erreicht hat, wird der in den ersten, zuerst angeordneten und momentan aktiven Abschnitt (ALₙ) eingespeiste Strom in einem der beiden Unterwerke (UW 2) abgeregelt und anschließend das zugeordnete Streckenkabel (KL) durch Öffnen eines Kuppelschalters (6) in zwei Teilstränge (TLa, TLb) getrennt, wobei der stromführende Teilstrang (TLa) mit dem aktiven Abschnitt (ALₙ) elektrisch verbunden ist,
b) der stromlose Teilstrang (TLb) wird mit dem zweiten Abschnitt (ALₙ₊₁) elektrisch verbunden und der Strom in dem stromlosen Teilstrang (TLb) zugeordneten Unterwerk (UW 2) wieder aufgeregelt,
c) wenn das Fahrzeug (F) den vor der Trennstelle (8) liegenden Abschnitt (ALₙ) verlassen hat, wird dieser durch Abregeln des Stromes in dem mit ihm verbundenen Unterwerk (UW 1) inaktiviert,
d) die Teilstränge (TLa, TLb) werden durch Schließen des Kuppelschalters (6) wieder miteinander verbunden und der vorher nach Schritt (c) abgeregelte Strom in dem entsprechenden Unterwerk (UW 1) wieder aufgeregelt, wobei
e) während der Gesamtdauer des Abschnittswechsels der versetzt zu den umzuschaltenden Abschnitten (ALₙ, ALₙ₊₁) angeordnete, die Trennstelle (8) überlappende Abschnitt (ARₙ) des jeweils anderen Wicklungsstranges (R) von beiden Unterwerken mit Strom versorgt wird.

3. Verfahren nach Anspruch 2, mit folgendem Merkmal:
f) die Maßnahmen gemäß Schritt (b) sind spätestens dann abgeschlossen, wenn das Fahrzeug die Trennstelle (8) mit seinem vorderende erreicht hat.

4. Verfahren nach Anspruch 1, 2 oder 3, mit folgendem Merkmal:
g) einem ersten Paar aufeinanderfolgender Abschnitte (ALₙ, ALₙ₊₁) des einen Wicklungsstranges (L) und einem zweiten Paar aufeinanderfolgender und versetzt zum ersten Paar angeordneter Abschnitte (ARₙ, ARₙ₊₁) des anderen Wicklungsstranges (R) ist eine gemeinsame Schaltstelle (SL1) zugeordnet, die zwei den Streckenkabeln (KL, KR) zugeordnete Kuppelschalter (6, 7) und vier Speiseschalter (2 - 5) zur Steuerung der Einspeisung von Strom in die Abschnittspaare, umfaßt.

5. Verfahren nach einem der Ansprüche 1 bis 4, mit folgendem Merkmal:
h) der Abschnittsversatz zwischen den Abschnitten (AL, AR) des ersten und zweiten Wicklungsstranges (L, R) ist größer als die Länge eines Fahrzeuges (F).

6. Verfahren nach Anspruch 5, mit folgendem Merkmal:
i) der Abschnittsversatz ist mindestens so groß wie die Summe aus der Fahrzeuglänge und den bei einer gegebenen Geschwindigkeit des Fahrzeuges während der Auf- und Abregelung des Stromes und während der Schalterbetätigungszeiten durchfahrenen Strecken.

7. Verfahren der Ansprüche 1 bis 6, mit folgenden Merkmalen:
j) für die zwischen den Abschnittswechseln liegenden Bereiche wird ein reduzierter Nennstrom zur Verfügung gestellt, wobei
k) die so geschaffene Stromreserve zur Erhöhung des Schubkraftanteiles eines oder mehrerer der nicht stromlosen Abschnitte während des Abschnittswechsels genutzt wird.

8. Verfahren nach Anspruch 7, mit folgendem Merkmal:
l) der Nennstrom zwischen den Abschnittswechseln ist auf 75 % reduziert.

## Claims

1. Section-changing method for switching over the current between successive stator sections of the stator winding of a railway system comprising a vehicle (F) and a track and with a long-stator linear motor, having the following features:
a) the track (1) comprises a right-hand and a left-hand stator winding phase (R and L respectively), which are composed of a plurality of sections (A) or individual windings, specifically a plurality of stator sections,
b) the sections of the left-hand winding phase (L) are offset relative to the sections of the right-hand winding phase (R),
c) the left-hand winding phase (L) is assigned a first section cable (KL) and the right-hand winding phase (R) a second section cable (KR) for supplying power to the sections,
d) power is supplied to the section cable from one cable end by a first substation (UW1) and from the other cable end by a second substation (UW2),
e) the section cables can be separated into two subphases (TLa, TLb) with the aid of a circuit-breaker, it being the case that, when the current is being switched over or the section is being changed, one subphase (TLa) is electrically connected to the first (ALn), and the other subphase (TLb) is electrically connected to the second (ALn+1) of the sections to be changed over.

2. Method according to Claim 1, which comprises the following temporally successive steps:
a) before the vehicle (F) has reached the sectioning point (8) between two sections (Alₙ, ALₙ₊₁) to be changed over of a winding phase (L), the current fed into the first, leading and instantaneously active section (ALₙ) is turned down in one of the two substations (UW 2) and the assigned section cable (KL) is subsequently separated into two subphases (TLa, TLb) by opening a coupler circuit-breaker (6), the current-carrying subphase (TLa) being electrically connected to the active section (ALₙ),
b) the de-energized subphase (TLb) is electrically connected to the second section (ALₙ₊₁) and the current in the substation (UW 2) assigned to the de-energized subphase (TLb) is turned up again,
c) when the vehicle (F) has left the section (ALₙ) upstream of the sectioning point (8), said section is de-activated by turning down the current in the substation (UW 1) connected to it,
d)the subphases (TLa, TLb) are connected to one another again by closing the coupling circuit-breaker (6), and the current previously turned down in accordance with step (c) in the corresponding substation (UW 1) is turned up again, it being the case that
e) over the entire duration of the section change, the section (ARₙ), arranged offset relative to the sections (ALₙ, ALₙ₊₁) to be changed over and overlapping the sectioning point (8), of the respectively other winding phase (R) is supplied with power from both substations.

3. Method according to Claim 2, having the following feature:
f) the measures in accordance with step (b) are concluded at the latest when the vehicle has reached the sectioning point (8) with its front end.

4. Method according to Claim 1, 2 or 3, having the following feature:
g) there is assigned to a first pair of successive sections (ALₙ, ALₙ₊₁) of one winding phase (L) and to a second pair of successive sections (ARₙ, ARₙ₊₁), arranged offset relative to the first pair, of the other winding phase (R) a common switching point (SL1) which comprises two coupler circuit-breakers (6, 7), assigned to the section cables (KL, KR), and four feed switches (2 - 5) for controlling the infeed of current into the pairs of sections.

5. Method according to one of Claims 1 to 4, having the following feature:
h) the section offset between the sections (AL, AR) of the first and second winding phases (L, R) is larger than the length of a vehicle (F).

6. Method according to Claim 5, having the following feature:
i) the section offset is at least as large as the sum of the vehicle length and the stretches traversed, at a given speed of the vehicle, during the turning up and turning down of the current and during the switch actuating times.

7. Method according to Claims 1 to 6, having the following features:
j) a reduced nominal current is made available for the regions situated between the section changes, it being the case that
k) the power reserve thus created is used to increase the thrust component of one or more of the non de-energized sections during the section change.

8. Method according to Claim 7, having the following feature
l) the nominal current is reduced to 75% between the section changes.

## Revendications

1. Procédé de changement de section pour la commutation du courant entre des sections de stator successives de l'enroulement de stator d'un système ferroviaire comprenant un véhicule (F) et une voie de circulation et avec moteur linéaire à stator longitudinal, comprenant les caractéristiques suivantes :
a) la voie de circulation (1) comprend une phase d'enroulement de stator droite (R) et une phase d'enroulement de stator gauche (L) qui se composent de plusieurs sections (A) ou enroulements individuels, à savoir plusieurs sections de stator,
b) les sections de la phase d'enroulement gauche (L) sont disposées décalées par rapport aux sections de la phase d'enroulement droite (R),
c) pour l'alimentation en courant des sections, un premier câble de voie (KL) est associé à la phase d'enroulement gauche (L) et un deuxième câble de voie (KR) est associé à la phase d'enroulement droite (R),
d) une première sous-station (UW 1) alimente en courant les câbles de voie à partir d'une première extrémité de câble et une deuxième sous-station (UW 2) les alimente en courant à partir de l'autre extrémité de câble,
e) les câbles de voie peuvent être coupés en deux phases partielles (TLa, TLb) à l'aide d'un interrupteur de telle sorte que, lors de la commutation du courant c'est-à-dire lors du changement de section, une phase partielle (TLa) est reliée électriquement à la première (ALₙ) des sections à commuter et l'autre phase partielle (TLb) à la deuxième (ALₙ₊₁).

2. Procédé selon la revendication 1, comprenant les étapes suivantes qui se succèdent chronologiquement :
a) avant que le véhicule (F) ait atteint le point de coupure (8) entre deux sections à commuter (ALₙ, ALₙ₊₁) d'une phase d'enroulement (L), le courant introduit dans la première section (ALₙ) placée en premier et momentanément active est régulé vers le bas dans l'une des deux sous-stations (UW 2) puis le câble de voie associé (KL) est coupé en deux phases partielles (TLa, TLb) en ouvrant un interrupteur de couplage (6), la phase partielle conductrice de courant (TLa) étant reliée électriquement à la section active (ALₙ),
b) la phase partielle sans courant (TLb) est reliée électriquement à la deuxième section (ALₙ₊₁) et le courant dans la sous-station (UW 2) associée à la phase partielle sans courant (TL_{b}) est à nouveau régulé vers le haut,
c) lorsque le véhicule (F) a quitté la section (ALₙ) située avant le point de coupure (8), celle-ci est inactivée par la régulation vers le bas du courant dans la sous-station (UW 1) qui lui est reliée,
d) les phases partielles (TLa, TLb) sont à nouveau reliées ensemble par la fermeture de l'interrupteur de couplage (6) et le courant précédemment régulé vers le bas à l'étape (c) dans la sous-station correspondante (UW 1) est à nouveau régulé vers le haut,
e) pendant toute la durée du changement de section, la section (ARₙ), disposée décalée par rapport aux sections à commuter (ALₙ, ALₙ₊₁) et recouvrant le point de coupure (8), de l'autre phase d'enroulement respective (R) étant alimentée en courant par les deux sous-stations.

3. Procédé selon la revendication 2, comprenant la suivante :
f) les mesures prises à l'étape (b) sont terminées au plus tard lorsque le véhicule a atteint le point de coupure (8) avec son extrémité avant.

4. Procédé selon la revendication 1, 2 ou 3, comprenant la caractéristique suivante :
g) il est associé à une première paire de sections successives (ALₙ, ALₙ₊₁) d'une phase d'enroulement (L) et à une deuxième paire de sections successives (ARₙ, ARₙ₊₁), disposées décalées par rapport à la première paire, de l'autre phase d'enroulement (R), un poste de commutation (SL1) commun qui comprend deux interrupteurs de couplage (6, 7) associés aux câbles de voie (KL, KR) et quatre interrupteurs d'alimentation (2 à 5) pour la commande de l'introduction de courant dans les paires de sections.

5. Procédé selon l'une des revendications 1 à 4, comprenant la caractéristique suivante :
h) le décalage entre les sections (AL, AR) de la première et de la deuxième phase d'enroulement (L, R) est plus grand que la longueur d'un véhicule (F).

6. Procédé selon la revendication 5, comprenant les étapes suivantes :
i) le décalage entre sections est au moins aussi grand que la somme de la longueur de véhicule et du trajet parcouru pour une vitesse donnée du véhicule pendant la régulation vers le haut et vers le bas du courant et pendant les temps d'actionnement d'interrupteurs.

7. Procédé selon l'une des revendications 1 à 6, comprenant les caractéristiques suivantes :
j) un courant nominal réduit est mis à disposition pour les zones situées entre les changements de section,
k) la réserve de courant ainsi créée est utilisée pour augmenter la composante de force de poussée de l'une ou de plusieurs des sections qui ne sont pas sans courant pendant le changement de section.

8. Procédé selon la revendication 7, comprenant la caractéristique suivante :
l) le courant nominal entre les changements de section est réduit à 75 %.
